Europäisches Patentamt

European Patent Office

Office européen des brevets

(19)

(11) Numéro de publication : **0 332 509 B1**

(12) ## FASCICULE DE BREVET EUROPEEN

(45) Date de publication du fascicule du brevet :
08.01.92 Bulletin 92/02

(51) Int. Cl.⁵ : **F16F 9/36, F16J 15/00**

(21) Numéro de dépôt : **89400583.4**

(22) Date de dépôt : **02.03.89**

(54) Amortisseur à étanchéité dynamique améliorée.

(30) Priorité : 09.03.88 FR 8803037

(43) Date de publication de la demande :
13.09.89 Bulletin 89/37

(45) Mention de la délivrance du brevet :
08.01.92 Bulletin 92/02

(84) Etats contractants désignés :
**DE GB IT NL**

(56) Documents cités :
EP-A- 0 252 825
DE-A- 1 807 614
DE-A- 3 321 084
DE-C- 702 160
FR-A- 709 327
FR-A- 1 194 294
FR-A- 2 313 604
FR-A- 2 381 952

(73) Titulaire : **MESSIER BUGATTI**
**Zone aéronautique Louis Bréguet B.P. 40**
**F-78140 Velizy Villacoublay (FR)**

(72) Inventeur : **Woerner, Pierre**
**30 Avenue Raymond Croland**
**F-92260 Fontenay-aux-Roses (FR)**
Inventeur : **Hainaut, Jean-Pierre**
**13 Avenue de Bretagne**
**F-94510 La Queue-en-Brie (FR)**

(74) Mandataire : **Fruchard, Guy et al**
**CABINET BOETTCHER 23, rue la Boétie**
**F-75008 Paris (FR)**

Jouve, 18, rue Saint-Denis, 75001 PARIS

EP 0 332 509 B1

## Description

La présente invention concerne un amortisseur à étanchéité dynamique améliorée.

On sait que les amortisseurs, en particulier les amortisseurs intégrés au train d'atterrissage des avions comportent d'une façon générale un caisson ayant une ouverture dans laquelle est montée une tige coulissante délimitant avec le caisson un volume interne contenant un gaz sous pression et un liquide d'amortissement, la tige étant montée pour coulisser de façon étanche par rapport au caisson sur une course maximale d'enfoncement et délimitant avec le caisson une chambre annulaire communiquant avec le volume interne du caisson.

Pour un bon fonctionnement de l'amortisseur, il est nécessaire d'éviter des fuites du liquide d'amortissement et il est donc partilucièrement important de disposer d'un dispositif d'étanchéité très efficace.

On connaît du document DE-C-702160 un amortisseur du type précité comportant plusieurs joints d'étanchéité. Toutefois, ces joints sont en service simultanément de sorte que cette multiplicité de joints ne procure pas un allongement significatif de la durée d'utilisation de l'amortisseur.

Par ailleurs, le document DE-A-1807614 décrit un dispositif hydraulique à tige coulissante comportant un palier d'étanchéité comprenant deux joints d'étanchéité pouvant être utilisés successivement. Toutefois, les joints d'étanchéité sont disposés à proximité de l'ouverture du caisson dans laquelle s'étend la tige coulissante de sorte qu'ils sont soumis à des efforts tranchants importants et à la pollution apportée lors du coulissement de la tige.

Un but de la présente invention est de proposer un amortisseur comportant une structure propre à assurer une étanchéité dynamique élevée même après un nombre important de sollicitations de l'amortisseur.

En vue de la réalisation de ce but, on prévoit selon un mode de réalisation de l'invention un amortisseur du type decrit dans le document DE-C-702160 caractérisé en ce que les joints d'étanchéité sont séparés par une gorge reliée à la chambre annulaire par un canal d'équilibrage, en ce que l'amortisseur comporte des moyens d'obturation du canal d'équilibrage accessibles de l'extérieur du caisson et en ce que le palier d'étanchéité est à une distance du palier support au moins égale à une course maximale de la tige coulissante.

Ainsi, en raison de l'écartement du palier d'étanchéité par rapport à l'ouverture du caisson, l'effort tranchant sur les joints d'étanchéité est réduit et l'usure correspondante des joints d'étanchéité est minimisée. De plus la partie de tige coulissante venant en regard des joints d'étanchéité reste constamment protégée contre la pollution extérieure quels que soient les mouvements de détente ou de compression de l'amortisseur. En particulier, la partie de tige coulissante venant en regard des joints d'étanchéité est ainsi protégée contre les rayures génératrices de fuites du liquide d'amortissement.

Il est également connu du document EP-A-252825 un amortisseur comportant un palier d'étanchéité porté par la tige coulissante et en contact avec une tige plongeuse solidaire du caisson.

Selon un autre mode de réalisation de l'invention, un amortisseur du type décrit dans ce dernier document est caractérisé en ce que le palier d'étanchéité comporte au moins deux joints d'étanchéité séparés par une gorge reliée à la chambre annulaire par un canal d'équilibrage, en ce que l'amortisseur comporte des moyens d'obturation du canal d'équilibrage d'équilibrage s'étendant dans un espace intermédiaire entre le caisson et la tige plongeuse, et en ce que le caisson comporte une ouverture latérale.

De préférence, cette ouverture latérale est disposée à un niveau correspondant à celui des moyens d'obturation pour une position sous charge statique moyenne de l'amortisseur. Ainsi, par des ajustements faibles de la pression de gonflage, on peut amener les moyens d'obturation du canal d'équilibrage en face de cette ouverture et manoeuvrer les moyens d'obturation.

D'autres caractéristiques et avantages de l'invention apparaîtront à la lecture de la description qui suit de deux modes de réalisation particuliers non limitatifs de l'invention en liaison avec les dessins ci-joints parmi lesquels :

— la figure 1 est une vue partiellement en coupe axiale schématique d'un premier mode de réalisation de l'invention,

— la figure 2 est une vue analogue à celle de la figure 1 d'un second mode de réalisation,

— la figure 3 est une vue partielle agrandie de la partie de figure 2 entourée d'un cercle.

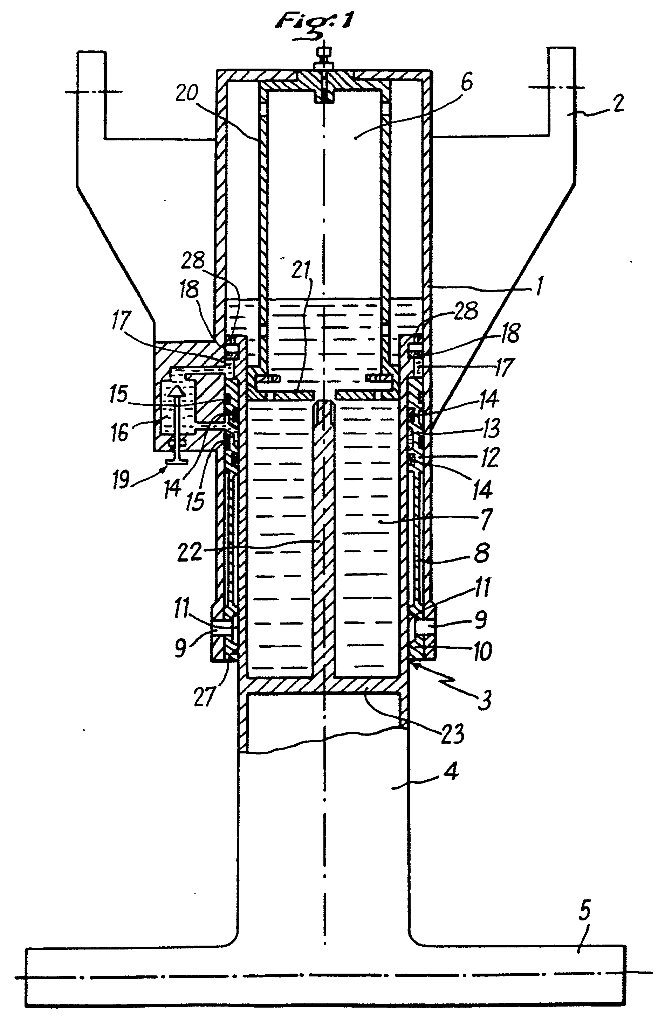

En référence à la figure 1, l'amortisseur selon l'invention comporte un caisson 1 formant la jambe de l'atterrisseur et pourvu à cet effet de moyens de fixation 2 à la structure d'un avion. A sa partie inférieure, le caisson 1 comporte une ouverture 3 dans laquelle est montée une tige coulissante 4 comportant à sa partie inférieure un arbre transversal 5 destiné à porter les roues de l'atterrisseur. La tige coulissante 4 délimite avec le caisson 1 un volume interne 6 contenant un gaz sous pression et un liquide d'amortissement 7. Dans le mode de réalisation de la figure 1, la tige coulissante 4 est retenue à l'intérieur du caisson par un manchon cylindrique 8 fixé au caisson par des moyens 9. A sa partie inférieure, le manchon 8 comporte une surépaisseur s'étendant au voisinage de l'ouverture 3 du caisson et formant un palier support 10. Sur sa face interne, le palier support 10 comporte une gorge annulaire 11 destinée à recevoir de la graisse pour faciliter le coulissement de la tige coulissante 4, et un racleur 27 qui permet d'éviter une remontée des poussières ou d'autres éléments polluants à l'intérieur du manchon 8. A son extrémité supérieure, le manchon 8 comporte une surépaisseur 12 formant un palier d'étanchéité comportant une gorge annulaire 13 en regard de la surface externe de la tige coulissante 4, deux joints d'étanchéité dynamique annulaires 14 disposés de part et d'autre de la gorge annulaire 13, et deux joints d'étanchéité statique annulaires 15 disposés entre la surface externe du palier d'étanchéité 12 et la surface interne en regard du caisson 1.

La gorge annulaire 13 est reliée à une chambre annulaire 17 par un canal d'équilibrage 16 s'étendant dans une paroi latérale du caisson 1. La chambre annulaire 17 est délimitée à sa partie inférieure par l'extrémité supérieure du palier d'étanchéité 12, à sa partie supérieure par un épaulement de la tige coulissante 4 et latéralement par le caisson et la tige coulissante. La chambre annulaire communique avec l'intérieur de la tige coulissante par des orifices 28 qui, dans l'exemple illustré, sont équipés de clapets de laminage en détente 18. Un robinet 19 est monté dans le canal d'équilibrage 16 pour obturer à volonté celui-ci et comporte une tige de commande qui débouche à l'extérieur du caisson 1.

Par ailleurs, l'amortisseur comporte de façon classique une tige plongeuse 20 fixée à l'intérieur du caisson 1 et comportant à sa partie inférieure une cloison de laminage 21 ayant une ouverture centrale à travers laquelle peut s'engager une tige de laminage 22 solidaire de la tige coulissante 4.

Le fond 23 de la tige coulissante sert de butée pour limiter la course maximale d'enfoncement de la tige coulissante à une valeur déterminée en fonction des différents paramètres de l'amortisseur. La distance entre le palier support 10 et le palier d'étanchéité 12 est de préférence supérieure à la course maximale d'enfoncement de la tige coulissante 4. Si la surface externe de la tige coulissante 4 est rayée lors d'une position détendue de l'amortisseur, cette rayure n'atteint donc pas le joint d'étanchéité inférieur 14, même pour un enfoncement maximal de la tige coulissante. On évite ainsi que du liquide d'amortissement puisse s'échapper par les rayures.

Dans la position illustrée sur la figure 1, le robinet 19 est en position ouverte et le joint d'étanchéité dynamique 14 est donc soumis à une pression équilibrée puisque la gorge annulaire 13 est en équipression avec la chambre de laminage annulaire 17 par l'intermédiaire du canal d'équilibrage 16. Dans cette position, seul le joint d'étanchéité dynamique 14 inférieur est sollicité. Lorsque l'on constate que le joint d'étanchéité dynamique 14 inférieur est usé, par exemple en raison d'un léger suintement du liquide d'amortissement, le robinet 19 est fermé. Le joint d'étanchéité dynamique 14 supérieur est alors en service et prend le relais du joint d'étanchéité inférieur. On notera à ce propos que ces joints sont soumis à un effort tranchant réduit puisque la majeure partie de l'effort tranchant auquel la tige coulissante est soumise est absorbée par le palier support 10.

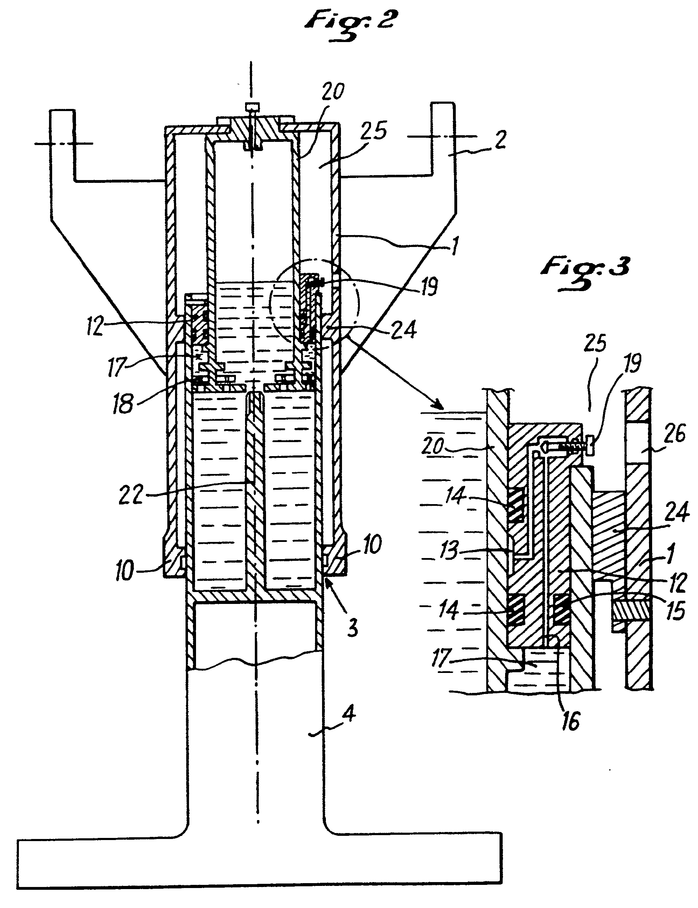

Les figures 2 et 3 illustrent un autre mode de réalisation de l'amortisseur selon l'invention. Les pièces ayant une fonction identique à celle de la figure 1 ont été repérées par des références numériques identiques. La différence avec le mode de réalisation illustré sur la figure 1 réside dans le fait que le palier d'étanchéité 12 est cette fois porté par la tige coulissante et les joints d'étanchéité dynamique sont cette fois en contact avec la surface externe de la tige plongeuse 20. La chambre annulaire 17 est alors réalisée en dessous du palier d'étanchéité 12, entre celui-ci et une collerette prolongeant la cloison de laminage 21 radialement vers l'extérieur au-delà de la tige plongeuse 20. Le caisson comporte cette fois un premier palier support 10 et un second palier support 24 disposé environ à mi-hauteur du caisson 1 et ne comportant pas de système d'étanchéité.

Ainsi qu'on peut le voir plus en détail sur la figure 3, la tête de robinet 19 s'étend dans un espace intermédiaire 25 entre le caisson 1 et la tige plongeuse 20 et le caisson comporte une ouverture latérale 26 permettant un accès aisé à la tête du robinet 19 pour manoeuvrer celui-ci. De préférence, l'ouverture latérale 26 du caisson est disposée à un niveau correspondant à celui de la tête du robinet 19 pour une position sous charge statique moyenne de l'amortisseur. Ainsi, il est aisé d'amener la tête du robinet 19 en face de l'ouverture 25 par des ajustements faibles de la pression de gonflage du volume interne 6.

Bien entendu l'invention n'est pas limitée aux modes de réalisation décrits et on peut y apporter des variantes de réalisation sans sortir du cadre de l'invention. En particulier, bien que les robinets 19 aient été représentés sous forme de vis pointeau, on pourra prévoir d'autres moyens d'obturation du canal d'équilibrage 16, par exemple des systèmes à boisseau, à guillotine ou à billes. Bien que dans les exemples de réalisation illustrés, la chambre annulaire 17 soit à chaque fois équipée de clapets de laminage en détente 18, l'invention s'applique également à des amortisseurs dans lesquels la chambre annulaire est en communication sensiblement libre avec le liquide d'amortissement 7.

**Revendications**

1. Amortisseur comportant un caisson (1) ayant une ouverture (3) dans laquelle est montée une tige coulissante (4) délimitant avec le caisson un volume interne (6) contenant un gaz sous pression et un liquide d'amortissement (7), des moyens pour délimiter une chambre annulaire (17) variable en fonction d'un enfoncement de la tige coulissante (4) dans le caisson (1) et communiquant avec le volume interne (6), au moins un palier support (10) entre le caisson et la tige coulissante au voisinage de l'ouverture du caisson, et un palier d'étanchéité (12) comprenant au moins deux joints d'étanchéité (14) portés par le caisson (1) et en contact avec une surface externe de la tige coulissante (4), espacé du palier support et disposé à un niveau correspondant à une partie haute de la tige coulissante (4) pour une position détendue de l'amortisseur, le palier d'étanchéité (12) ayant un côté en contact avec la chambre annulaire caractérisé en ce que les joints d'étanchéité (14) sont séparés par une gorge (13) reliée à la chambre annulaire (17) par un canal d'équilibrage (16), en ce que l'amortisseur comporte des moyens d'obturation (19) du canal d'équilibrage (16) accessibles à l'extérieur du caisson et en ce que le palier d'étanchéité (12) est à une distance du palier support (10) au moins égale à une course maximale de la tige coulissante.

2. Amortisseur comportant un caisson (1) ayant une ouverture (3) dans laquelle est montée une tige coulissante (4) délimitant avec le caisson un volume interne (6) contenant un gaz sous pression et un liquide d'amortissement (7), des moyens pour délimiter une chambre annulaire (17) variable en fonction d'un enfoncement de la tige coulissante (4) dans le caisson (1) et communiquant avec le volume interne (6), au moins un palier support (10) entre le caisson et la tige coulissante au voisinage de l'ouverture du caisson, et un palier d'étanchéité (12) espacé du palier support, porté par la tige coulissante (4) au voisinage de son extrémité supérieure, et en contact avec une tige plongeuse (20) solidaire du caisson (1), le palier d'étanchéité (12) ayant un côté en contact avec la chambre annulaire caractérisé en ce que le palier d'étanchéité comporte au moins deux joints d'étanchéité (14) séparés par une gorge (13) reliée à la chambre annulaire (17) par un canal d'équillibrage (16), en ce que l'amortisseur comporte des moyens d'obturation (19) du canal d'équilibrage (16) s'étendant dans un espace intermédiaire (25) entre le caisson (1) et la tige plongeuse (20), et en ce que le caisson (1) comporte une ouverture latérale (26).

3. Amortisseur selon la revendication 2, caractérisé en ce que l'ouverture latérale (26) du caisson est disposée à un niveau correspondant à celui des moyens d'obturation (19) pour une position sous charge statique moyenne de l'amortisseur.

## Patentansprüche

1. Stoßdämpfer, umfassend ein Gehäuse (1) mit einer Öffnung (3), in welcher eine verschiebbare Stange (4) gelagert ist, die mit dem Gehäuse einen ein unter Druck stehendes Gas und eine Dämpfungsflüsigkeit (7) enthaltenden Innenraum (6) bildet, ferner Mittel zur Bildung einer Ringkammer (17), die in Abhängigkeit vom Eintauchweg der verschiebbaren Stange (4) in das Gehäuse veränderlich ist und mit dem Innenraum (6) in Verbindung steht, ferner wenigstens ein im Bereich der Öffnung des Gehäuses angeordnetes, zwischen Gehäuse und verschiebbarer Stange wirksames Traglager (10), und ein Dichtungslager (12) mit wenigstens zwei vom Gehäuse (1) gehaltenen und an einer Außenfläche der verschiebbaren Stange (4) anliegenden Dichtungen (14), welches einen Abstand zum Traglager hat und auf einer Höhe angeordnet ist, die einem oberen Abschnitt der verschiebbaren Stange (4) bei einer entspannten Stellung des Stoßdämpfers entspricht, wobei das Dichtungslager (12) mit einer Seite an der Ringkammer anliegt, dadurch **gekennzeichnet,** daß die Dichtungen (14) durch eine Hohlkehle (13) voneinander getrennt sind, die mit der Ringkammer (17) über einen Ausgleichskanal (16) verbunden ist, daß der Stoßdämpfer Mittel (19) zum Verschließen des Ausgleichskanals (16) hat, die von der Außenseite des Gehäuses zugänglich sind, und daß das Dichtungslager (12) vom Traglager (10) einen Abstand hat, welcher wenigstens gleich dem maximalen Verstellweg der verschiebbaren Stange ist.

2. Stoßdämpfer, umfassend ein Gehäuse (1) mit einer Öffnung (3), in welcher eine verschiebbare Stange (4) gelagert ist, die mit dem Gehäuse einen ein unter Druck stehendes Gas und eine Dämpfungsflüsigkeit (7) enthaltenden Innenraum (6) bildet, ferner Mittel zur Bildung einer Ringkammer (17), die in Abhängigkeit vom Eintauchweg der verschiebbaren Stange (4) in das Gehäuse veränderlich ist und mit dem Innenraum (6) in Verbindung steht, ferner wenigstens ein im Bereich der Öffnung des Gehäuses angeordnetes, zwischen Gehäuse und verschiebbarer Stange wirksames Traglager (10), und ein Dichtungslager (12), welches einen Abstand zum Traglager hat und welches von der verschiebbaren Stange (4) im Bereich ihres oberen Endes gehalten wird und an einer Tauchstange (20) anliegt, die mit dem Gehäuse (1) fest verbunden ist, wobei das Dichtungslager (12) mit einer Seite an der Ringkammer anliegt, dadurch **gekennzeichnet,** daß das Dichtungslager wenigstens zwei Dichtungen (14) umfaßt, die durch eine Hohlkehle (13) voneinander getrennt sind, welche mit der Ringkammer (17) über einen Ausgleichskanal (16) in Verbindung steht, daß der Stoßdämpfer Mittel (19) zum Verschließen des Ausgleichskanals (16) hat, die in einem Zwischenraum (25) zwischen dem Gehäuse (1) und der Tauchstange (20) angeordnet sind, und daß das Gehäuse (1) eine seitliche Öffnung (26) hat.

3. Stoßdämpfer nach Anspruch 2, dadurch **gekennzeichnet,** daß die seitliche Öffnung (26) des Gehäuses auf einer Höhe angeordnet ist, die der der Mittel (19) zum Verschließen bei einer unter einer mittleren statischen Belastung des Stoßdämpfers sich einstellenden Position entspricht.

## Claims

1. A shock absorber comprising a strut (1) having an opening (3) in which is mounted a sliding rod (4) delimiting with the strut an internal volume (6) containing a gas under pressure and a shock absorbing liquid (7), means for delimiting an annular chamber (17) which is variable as a function of the degree to which the sliding rod (4) penetrates into the strut (1) and which communicates with the internal volume (6), at least one support bearing (10) between the strut and the sliding rod in the vicinity of the opening of the strut and a sealing bearing (12) comprising at least two sealing rings (14) supported by the strut (1) and in contact with an external surface of the sliding rod (4), the sealing bearing (12) being spaced from the support bearing and disposed at a level corresponding to a top portion of the sliding rod (4) when the shock absorber is in the extended position, the sealing bearing (12) having one side in contact with the annular chamber, characterized in that the sealing rings (14) are separated by a groove (13) connected to the annular chamber (17) via a balance channel (16), in that the shock absorber includes balance channel shut-off means (19) which are accessible from outside the strut, and in that the sealing bearing (12) is at a distance from the support bearing (10) which is at least equal to a maximum stroke of the sliding rod.

2. A shock absorber comprising a strut (1) having an opening (3) in which is mounted a sliding rod (4) delimiting with the strut an internal volume (6) containing a gas under pressure and a shock absorbing liquid (7), means for delimiting an annular chamber (17) which is variable as a function of the degree to which the sliding rod (4) penetrates into the strut (1) and which communicates with the internal volume (6), at least one support bearing (10) between the strut and the sliding rod in the vicinity of the opening of the strut and a sealing bearing (12) at a distance from the support bearing, the sealing bearing (12) being supported by the sliding rod (4) in the vicinity of the upper end thereof, and being in contact with a dipping rod (20) which is fixed to the strut (1), the sealing bearing (12) having one side in contact with the annular chamber, characterized in that the sealing bearing includes at least two sealing rings (14) separated by a groove (13) connected to the annular chamber (17) via a balance channel (16), in that the shock absorber includes balance channel shut-off means (19) extending into an intermediate space (25) between the strut (1) and the dipping rod (20), and in that the strut (1) includes a lateral opening (26).

3. A shock absorber according to claim 2 characterized in that the lateral opening (26) in the strut is disposed at a level corresponding to the level of the shut-off means (19) when the shock absorber is subjected to an average static load.

Fig.1

*Fig. 2*

*Fig. 3*